# EUROPÄISCHE PATENTSCHRIFT

(11) **EP 0 752 350 B1**
(45) Veröffentlichungstag und Bekanntmachung des Hinweises auf die Patenterteilung: **08.03.2000**
(21) Anmeldenummer: 96110612.7
(22) Anmeldetag: 01.07.1996
(51) Int. Cl.: B60R 22/36

(54) **Gurtaufroller für einen Sicherheitsgurt**
Seat belt retractor
Rétracteur de sangle pour une ceinture de sécurité

(30) Priorität: 03.07.1995 DE 19524162
(43) Veröffentlichungstag der Anmeldung: 08.01.1997
(73) Patentinhaber: TRW Occupant Restraint Systems GmbH & Co. KG, 73551 Alfdorf (DE)
(72) Erfinder: Kielwein, Thomas, 73569 Eschach (DE)
(74) Vertreter: Degwert, Hartmut, Dipl.-Phys.

(56) Entgegenhaltungen:
- EP-A- 0 089 879
- EP-A- 0 112 032
- DE-A- 3 421 960
- DE-A- 3 437 693
- DE-A- 3 614 457
- DE-A- 4 000 313
- DE-A- 4 327 135
- US-A- 5 333 906

## Beschreibung

Die Erfindung betrifft einen Gurtaufroller für einen Sicherheitsgurt, mit einem Gehäuse, das zwei parallele Schenkel aufweist, in denen jeweils eine Öffnung ausgebildet ist, einer Gurtspule, die an ihren axialen Enden mit Sperrverzahnungen versehen ist, und einer Sperrklinke, die für eine selektive Blockierung der Gurtspule in deren Sperrverzahnungen einsteuerbar ist.

Im Stand der Technik sind grundsätzlich zwei Bauarten von Gurtaufrollern bekannt, bei denen unterschiedliche Wege zur Blockierung der Gurtspule verwendet werden. Zum einen sind Gurtaufroller bekannt, beispielsweise aus der DE-A-43 27 135, bei denen eine lasttragende Sperrklinke verwendet wird, die in die Sperrverzahnungen der Gurtspule eingesteuert werden kann, um diese zu blockieren. Die Gurtspule muß zum Zwecke der Blockierung nicht im Rahmen verlagert werden. Auch bei hohen Beanspruchungen, beispielsweise bei einer Notbremsung, trägt die in die Sperrverzahnungen der Gurtspule eingesteuerte Sperrklinke die gesamte Blockierlast in Umfangsrichtung. Diese Blockierlast kann im Crash-Fall extrem hohe Werte annehmen.

Zum anderen sind Gurtaul'roller bekannt, beispielsweise aus der DE-A-34 21 960, bei denen die Sperrklinke lediglich zur Vorsteuerung verwendet wird und an der Berandung der Öffnungen in den Gehäuseschenkeln jeweils eine Verzahnung ausgebildet ist, die den Sperrverzahnungen entspricht. Bei eingesteuerter Sperrklinke führt ein Zug am Gurtband dazu, daß die Gurtspule relativ zum Rahmen verlagert wird und mit ihren Sperrverzahnungen in die Verzahnungen in den Gehäuseschenkeln eingreift. Die Gurtspule muß also zum Zwecke der Blockierung im Rahmen verlagert werden; hierfür ist eine aufwendige Lagerung der Gurtspule erforderlich.

Aufgabe der Erfindung ist es, einen Gurtaufroller zu schaffen, bei dem zum einen die auf die Sperrklinke maximal einwirkende Blockierlast vermindert ist und zum anderen keine aufwendigen Lagerungen für die Gurtspule erforderlich sind.

Diese Aufgabe wird gemäß der Erfindung durch einen Gurtaufroller für einen Sicherheitsgurt gelöst, mit einem Gehäuse, das zwei parallele Schenkel aufweist, in denen jeweils eine Öffnung ausgebildet ist, einer Gurtspule, die drehbar so in dem Gehäuse gelagert ist, daß an ihren axialen Enden fest angebrachte Sperrverzahnungen innerhalb der Öffnungen angeordnet sind, einer lasttragenden Sperrklinke, die für eine selektive Blockierung der Gurtspule in deren Sperrverzahnungen einsteuerbar ist, und jeweils einer Verzahnung an der Berandung der Öffnungen, die den Sperrverzahnungen entspricht, aber wenigstens einen Stützbereich aufweist, der von den Sperrverzahnungen plastisch verformt werden kann, wobei die Sperrverzahnungen im Ruhezustand mit allseitigem Abstand zu den Öffnungen angeordnet sind, wobei die Gurtspule durch eine in blockiertem Zustand auf sie aufgebrachte Last, wie sie beispielsweise bei einer Notbremsung auftritt, in bezüglich ihrer Achse radialer Richtung verlagerbar ist, bis sie mit den Sperrverzahnungen an den Stützbereichen der Verzahnungen anliegt, wodurch eine weitere Verlagerung der Gurtspule verhindert ist, und wobei die Stützbereiche bei einer großen Belastung der Gurtspule, wie sie beispielsweise bei einem Unfall auftritt, von den Sperrverzahnungen plastisch verformt werden, so daß die Gurtspulc radial verlagert wird und es zu einem Eingriff zwischen den Sperrverzahnungen und den Verzahnungen des Gehäuses kommt. Durch die Erfindung muß die Sperrklinke bei auf die Gurtspule einwirkenden großen Lasten nur einen Teil der Blockierlast tragen, da das Gehäuse einen wesentlichen Beitrag zur Abstützung der Belastung in Umfangsrichtung leistet.

Gemäß einer bevorzugten Ausführungsform der Erfindung ist vorgesehen, daß der Stützbereich ein Metallsteg ist, der eine Lücke zwischen zwei benachbarten Zähnen der Verzahnung auffüllt. Diese Gestaltung ermöglicht eine besonders einfache und kostengünstige Ausbildung des Stützbereichs.

Weitere vorteilhafte Ausgestaltungen sind in den weiteren Unteransprüchen ausgeführt.

Die bevorzugte Ausführungsform der Erfindung wird nachfolgend unter Bezugnahme auf die beigefügten Zeichnungen beschrieben. In diesen zeigen:
- Fig. 1 eine Seitenansicht eines erfindungsgemäßen Gurtaufrollers im Ruhezustand;
- Fig. 2 eine Seitenansicht des Gurtaufrollers von Fig. 1 mit eingesteuerter Sperrklinke;
- Fig. 3 den Gurtaufroller von Fig. 1, bei dem die Sperrverzahnungen an den Schenkeln abgestützt sind; und
- Fig. 4 den Gurtaufroller von Fig. 1 mit plastisch verformtem Stützbereich.

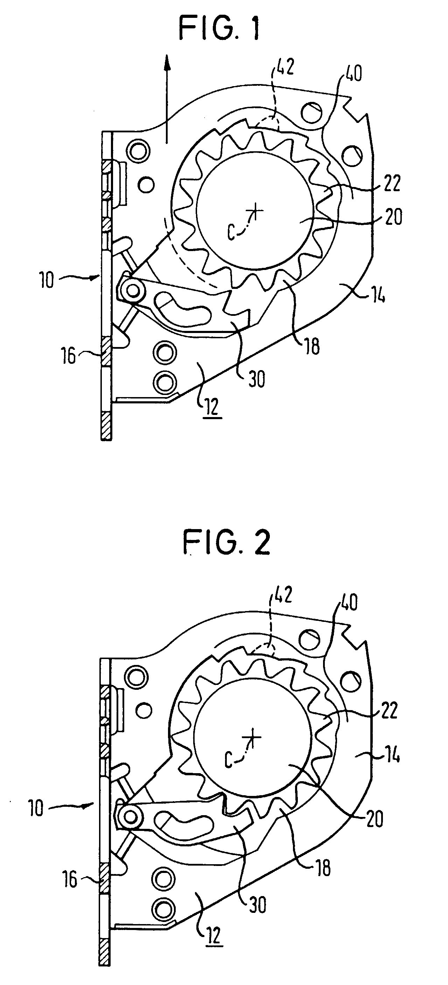

In den Figuren 1 bis 4 ist in einer Seitenansicht ein erfindungsgemäßer Gurtaufroller 10 für einen Sicherheitsgurt dargestellt. Er umfaßt ein Gehäuse 12, welches in der Form eines U mit zwei parallelen Schenkeln und einem dazwischenliegenden Mittelteil ausgebildet ist. Von diesem Gehäuse sind in den Figuren nur der Schenkel 14 sowie geschnitten der Mittelteil 16 zu sehen. In den Schenkeln ist jeweils eine Öffnung 18 ausgebildet.

In dem Gehäuse ist drehbar eine Gurtspule 20 gelagert, die eine Achse C sowie an ihren axialen Enden jeweils eine angeformte Sperrverzahnung 22 aufweist. Diese Sperrverzahnung 22 ist in der Öffnung 18 so angeordnet, daß in dem in Fig. 1 dargestellten Ruhezustand des Gurtaufrollers die Sperrverzahnung 22 in einem allseitigen Abstand zu der Berandung der Öffnung 18 liegt. Die (nicht dargestellte) Lagerung der Gurtspule hält diese bis zu einer gewissen Belastung der blockierten Gurtspule mit im wesentlichen ortsfester Achse C in dem Gehäuse.

An dem Gehäuse ist eine Sperrklinke 30 angebracht, die aus der in Fig. 1 dargestellten Ruhestellung in die in den Figuren 2 bis 4 dargestellte Blockierstellung verschwenkt werden kann, in welcher die Gurtspule 20 durch Eingriff des freien Endes der Sperrklinke 30 in die Sperrverzahnung 22 gegen eine Drehung in der Abzugsrichtung des (nicht dargestellten) Gurtbandes blockiert ist. Das Einsteuern der Sperrklinke 30 in die Sperrverzahnung 22 kann durch jeden geeigneten Mechanismus erfolgen.

Die mit Ausnahme des Bereichs der Sperrklinke 30 im wesentlichen kreisförmige Berandung der Öffnung 18 der Schenkel des Gehäuses ist jeweils mit einer Verzahnung 40 versehen, die im vorliegenden Fall durch fünf Zähne gebildet ist, deren Gestalt der Gestalt der Zähne der Sperrverzahnung 22 entspricht. Diese Verzahnung 40 erstreckt sich über einen Winkelbereich von etwa 90°, der etwa 45° hinter dem Gurtablaufpunkt am Umfang des Gurtwickels auf der Gurtspule 20 beginnt. Die Zähne der Verzahnung 40 sind so angeordnet, daß bei blockierter Gurtspule 20 die Zähne der Sperrverzahnung 22 geringfügig gegenüber den Zähnen der Verzahnung 40 versetzt sind. Die Zahnhöhe der Verzahnung 40 ist etwa halb so groß gewählt wie die Zahnhöhe der Sperrverzahnungen 22. In der Gurtabwickelrichtung ist hinter dem letzten Zahn der Verzahnungen 40 jeweils eine Ausnehmung ausgebildet. Ungefähr in der Mitte der Verzahnung 40 ist ein Zahn nicht ausgeschnitten, so daß ein Stützbereich 42 gebildet ist. Dieser Stützbereich 42 weist eine gegenüber der übrigen Wandstärke des Gehäuses 12 des Gurtaufrollers verminderte Wandstärke auf, nämlich etwa 0,8 mm gegenüber etwa 2 mm im übrigen Bereich des Gehäuses.

Es wird nachfolgend die Funktionsweise dieses Gurtaufrollers erläutert. In Fig. 1 ist der Ruhezustand des erfindungsgemäßen Gurtaufrollers dargestellt. Die Lagerung der Gurtspule 20 hält deren Sperrverzahnung 22 in allseitigem Abstand von der Berandung der Öffnungen 18. Wenn das Blockieren des Gurtaufrollers eingeleitet wird, was in bekannter Weise entweder fahrzeug- oder gurtbandsensitiv geschehen kann, wird die Sperrklinke 30 in die Sperrverzahnung 22 eingeschwenkt. Dabei verlagert sich die Gurtspule 20 innerhalb des Gehäuses 12 nicht. Dieser Zustand des Gurtaufrollers mit vollständig eingesteuerter Sperrklinke ist in Fig. 2 dargestellt.

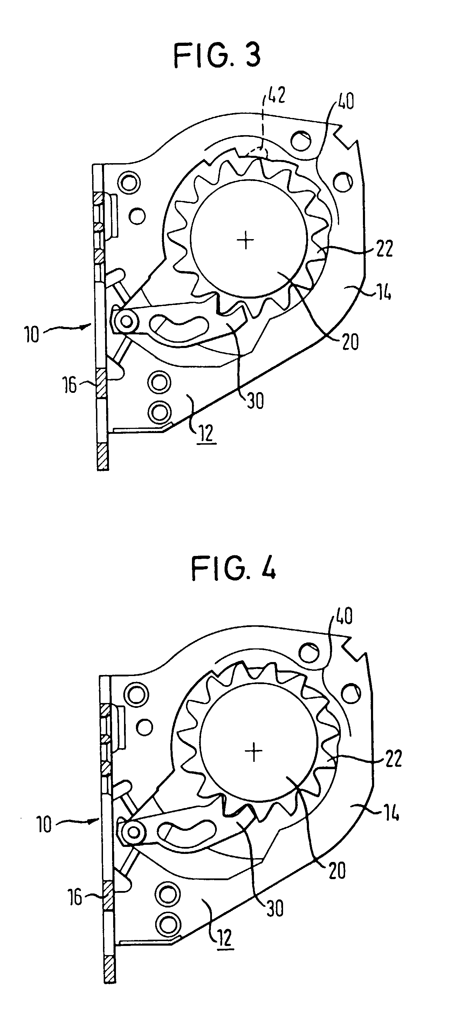

Wird nun bei blockierter Gurtspule 20 mittels des Gurtbandes eine zunehmende Belastung auf die Gurtspule aufgebracht, kommt es ab einer gewissen Belastung, wie sie beispielsweise bei einer Notbremsung auftritt, zu einer Verlagerung der Gurtspule in bezüglich ihrer Achse C radialer Richtung, bei der ihre Lagerung elastisch verformt wird. Durch diese Verlagerung gelangt ein Zahn der Sperrverzahnung 22 in Anlage an den Stützbereich 42 der Verzahnung 40, wodurch eine weitere Verlagerung der Gurtspule 12 und somit auch eine weitere Verformung ihrer Lagerung verhindert ist. Dieser Belastungsfall der Gurtspule ist in Fig. 3 dargestellt.

Wird die Belastung der Gurtspule weiter erhöht, kommt es zu einer plastischen Verformung des Stützbereichs 42 der Verzahnung 40 mit zugehöriger weiterer Verlagerung der Gurtspule 12 in bezüglich ihrer Achse C radialer Richtung. Dabei gibt die Lagerung der Gurtspule nach. Bei der Verlagerung führt die Gurtspule eine Bewegung aus, die aus einer Translation aufgrund der Verformung des Stützbereichs 42 und aus einer Schwenkbewegung um die Sperrklinke 30 aufgrund der Beaufschlagung der Gurtspule 12 in der Abwickelrichtung zusammengesetzt ist. Durch diese Bewegung gelangen die Zähne der Sperrverzahnung 22, welche bei unverlagerter Gurtspule 12 gegenüber den Zähnen der Verzahnung 40 versetzt sind, mit diesen lagegenau in Eingriff, so daß am Ende der Verlagerung der Gurtspule 12 fünf Zähne der Sperrverzahnung 22 in Eingriff mit der Verzahnung 40 des Schenkels 14 des Gehäuses 12 des Gurtaufrollers stehen. Dieser Zustand ist in Fig. 4 dargestellt. Durch die hinter dem letzten Zahn der Verzahnung ausgebildete Ausnehmung 40 ist ein unbehindertes Eintauchen der Sperrverzahnung 22 in die Verzahnung des Schenkels 14 möglich. Der Wert der Belastung, bei dem die Stützbereiche 42 plastisch verformt werden, kann in einfacher Weise durch die Dimensionierung dieses Stützbereichs beeinflußt werden. Bei der bevorzugten Ausführungsform der Erfindung ergibt sich durch eine Wandstärke von etwa 0,8 mm in diesem Bereich ein Nachgeben des Stützbereichs 42 bei einer Belastung der Gurtspule von etwa 3 bis 4 kN. Dieser Wert ist durch zwei Anforderungen vorgegeben. Einerseits muß der Wert so hoch sein, daß er während des üblichen Betriebs des Gurtaufrollers, auch bei einer Notbremsung des Fahrzeuges, nicht erreicht wird, da es andernfalls zu einer vorzeitigen plastischen Verformung des Stützbereiches 42 kommt. Andererseits soll der Wert so niedrig sein, daß es bei einer großen Belastung, beispielsweise bei einem Unfall des Fahrzeuges, bereits frühzeitig zu einem Eingriff zwischen der Sperrverzahnung 22 und der Verzahnung 40 des Gehäuses und somit zu einer Entlastung der Sperrklinke 30 kommt.

## Patentansprüche

1. Gurtaufroller für einen Sicherheitsgurt,
mit einem Gehäuse (12), das zwei parallele Schenkel (14) aufweist, in denen jeweils eine Öffnung (18) ausgebildet ist,
einer Gurtspule (20), die drehbar so in dem Gehäuse (12) gelagert ist, daß an ihren axialen Enden fest angebrachte Sperrverzahnungen (22) innerhalb der Öffnungen (18) angeordnet sind,
einer lasttragenden Sperrklinke (30), die für eine selektive Blockierung der Gurtspule (20) in deren Sperrverzahnungen (22) einsteuerbar ist,
und jeweils einer Verzahnung (40) an der Berandung der Öffnungen (18), die den Sperrverzahnungen (22) entspricht, aber wenigstens einen Stützbereich (42) aufweist, der von den Sperrverzahnungen (22) plastisch verformt werden kann,
wobei die Sperrverzahnungen (22) im Ruhezustand mit allseitigem Abstand zu den Öffnungen (18) angeordnet sind,
wobei die Gurtspule (20) durch eine in blockiertem Zustand auf sie aufgebrachte Last, wie sie beispielsweise bei einer Notbremsung auftritt, in bezüglich ihrer Achse (C) radialer Richtung verlagerbar ist, bis sie mit den Sperrverzahnungen (22) an den Stützbereichen (42) der Verzahnungen (40) anliegt, wodurch eine weitere Verlagerung der Gurtspule (12) verhindert ist,
und wobei die Stützbereiche bei einer großen Belastung der Gurtspule, wie sie beispielsweise bei einem Unfall auftritt, von den Sperrverzahnungen (22) plastisch verformt werden, so daß die Gurtspule radial verlagert wird und es zu einem Eingriff zwischen den Sperrverzahnungen (22) und den Verzahnungen (40) des Gehäuses kommt.

2. Gurtaufroller nach Anspruch 1, dadurch gekennzeichnet, daß der Stützbereich ein Metallsteg (42) ist, der eine Lücke zwischen zwei benachbarten Zähnen der Verzahnung (40) auffüllt.

3. Gurtaufroller nach Anspruch 2, dadurch gekennzeichnet, daß die Wandstärke der Schenkel (14) an der Stelle der Metallstege (42) lokal vermindert ist.

4. Gurtaufroller nach Anspruch 3, dadurch gekennzeichnet, daß die Wandstärke der Schenkel (14) an der Stelle der Metallstege (42) von etwa 2 mm auf etwa 0,8 mm vermindert ist.

5. Gurtaufroller nach einem der vorhergehenden Ansprüche, dadurch gekennzeichnet, daß sich die Verzahnungen (40) über einen Winkelbereich von etwa 90° erstrecken, der etwa 45° hinter dem Gurtablaufpunkt am Umfang des Gurtwickels auf der Gurtspule (20) beginnt.

6. Gurtaufroller nach einem der vorhergehenden Ansprüche, dadurch gekennzeichnet, daß die Zahnhöhe der Verzahnungen (40) nur etwa halb so groß ist wie die Zahnhöhe der Sperrverzahnungen (22).

7. Gurtaufroller nach einem der vorhergehenden Ansprüche, dadurch gekennzeichnet, daß die Verzahnungen (40) aus jeweils fünf Zähnen bestehen und daß der Stützbereich (42) jeweils die Lücke in der Mitte jeder Verzahnung (40) auffüllt.

8. Gurtaufroller nach einem der vorhergehenden Ansprüche, dadurch gekennzeichnet, daß in der Gurtabwickelrichtung hinter dem letzten Zahn der Verzahnungen (40) jeweils eine Ausnehmung ausgebildet ist.

## Claims

1. A belt retractor for a safety belt,
comprising a housing (12) which possesses two parallel limbs (14), in each of which an opening (18) is formed,
a belt drum (20) which is so mounted rotatably in the housing (12) that locking teeth (22) firmly attached at the axial ends of the belt drum are arranged within the openings (18),
a load bearing locking pawl (30) which for a selective locking of the belt drum (20) is able to be engaged with the locking teeth (22) thereof,
and a set of teeth (40) formed at the edge of each opening (18), which corresponds to the locking teeth (22) but possesses at least one support portion (42) which is able to be plastically deformed by the locking teeth (22),
the locking teeth (22) in the resting condition being arranged with an all-round clearance from the openings (18),
the belt drum (20) being adapted to be shifted in a radial direction in relation to its axis (C) by a load applied to it in the locked condition, as occurs for example during emergency braking, until the locking teeth (22) thereof rest against the support portions (42) of the sets of teetch (40), whereby a further displacement of the belt drum (12) is prevented,
and the support portions being plastically deformed by the locking teeth (22) in the case of a heavy load on the belt drum, as occurs for example during an accident, so that the belt drum is shifted radially and an engagement results between the locking teeth (22) and the sets of teech (40) of the housing.

2. The belt retractor as claimed in claim 1, characterized in that the support portion is a metal web (42) filling up a gap between two adjacent teeth (40).

3. The belt retractor as claimed in claim 2, characterized in that the wall thickness of the limbs (14) is locally reduced at the position of the metal webs (42).

4. The belt retractor as claimed in claim 3, characterized in that the wall thickness of the limbs (14) is reduced at the position of the metal webs (42) from approximately 2 mm to approximately 0.8 mm.

5. The belt retractor as claimed in any one of the preceding claims, characterized in that the sets of teeth (40) extend over an angular range of approximately 90° starting approximately 45° behind the run-off point of the belt on the periphery of the coil of belt on the belt drum (20).

6. The belt retractor as claimed in any one of the preceding claims, characterized in that the height of the teeth (40) is only approximately half that of the locking teeth (22).

7. The belt retractor as claimed in any one of the preceding claims, characterized in that each set of teeth (40) comprises five teeth and in that the support portion (42) respectively fills up the gap in the middle of each set of teeth (40).

8. The belt retractor as claimed in any one of the preceding claims, characterized in that a recess is formed behind the last tooth of each set of teeth (40) as viewed in the belt unwinding direction.

## Revendications

1. Enrouleur de ceinture pour une ceinture de sécurité, comprenant un boîtier (12) qui comporte deux branches parallèles (14) dans chacune desquelles est ménagée une ouverture (18), une bobine de ceinture (20) qui est montée en rotation dans le boîtier (12) de façon que des dentures d'arrêt (22) solidarisées à ses extrémités axiales soient disposées à l'intérieur des ouvertures (18), un cliquet d'arrêt porteur (30) apte à être engagé dans les dentures d'arrêt (22) de la bobine de ceinture (20) pour bloquer celle-ci sélectivement, et, sur le bord de chacune des ouvertures (18), une denture (40) qui correspond aux dentures d'arrêt (22) mais comporte au moins une zone d'appui (42) qui peut être déformée plastiquement par les dentures d'arrêt (22), les dentures d'arrêt (22) se trouvant de tous côtés à distance des ouvertures (18) en position de repos, la bobine de ceinture (20) pouvant être déplacée dans le sens radial par rapport à son axe (C) par une charge exercée sur elle en position bloquée, comme par exemple lors d'un freinage d'urgence, jusqu'à ce qu'elle vienne en contact avec les dentures d'arrêt (22) situées sur les zones d'appui (42) des dentures (40), ce qui empêche ladite bobine de ceinture (20) d'aller plus loin, et les zones d'appui étant déformées plastiquement par les dentures d'arrêt (22) en cas de forte sollicitation de la bobine de ceinture, telle qu'elle se produit par exemple lors d'un accident, ce qui a pour effet de déplacer radialement la bobine de ceinture et de mettre en prise les dentures d'arrêt (22) et les dentures (40) du boîtier.

2. Enrouleur de ceinture selon la revendication 1, caractérisé en ce que la zone d'appui est une bande métallique (42) qui comble un creux entre deux dents voisines de la denture (40).

3. Enrouleur de ceinture selon la revendication 2, caractérisé en ce que l'épaisseur de paroi des branches (14) est réduite localement au niveau des bandes métalliques (42).

4. Enrouleur de ceinture selon la revendication 3, caractérisé en ce que l'épaisseur de paroi des branches (14) est réduite d'environ 2 mm à environ 0,8 mm au niveau des bandes métalliques (42).

5. Enrouleur de ceinture selon une des revendications précédentes, caractérisé en ce que les dentures (40) s'étendent sur une zone angulaire d'environ 90° qui commence environ 45° après le point de déroulement de ceinture situé à la périphérie de l'enroulement constitué sur la bobine de ceinture (20).

6. Enrouleur de ceinture selon une des revendications précédentes, caractérisé en ce que la hauteur de dent des dentures (40) ne correspond qu'à environ la moitié de la hauteur de dent des dentures d'arrêt (22).

7. Enrouleur de ceinture selon une des revendications précédentes, caractérisé en ce que les dentures (40) sont chacune constituées de cinq dents, et en ce que la zone d'appui (42) comble le creux situé au centre de chaque denture (40).

8. Enrouleur de ceinture selon une des revendications précédentes, caractérisé en ce qu'un évidement est ménagé derrière la dernière dent de chacune des dentures (40) dans le sens de déroulement de la ceinture.
